# EUROPÄISCHE PATENTANMELDUNG

(11) **EP 3 563 696 A2**
(43) Veröffentlichungstag der Anmeldung: **06.11.2019**
(21) Anmeldenummer: 19171009.4
(22) Anmeldetag: 25.04.2019
(51) Int. Cl.: A24D 3/02

(54) **ENTNAHMETROMMEL FÜR EINE MASCHINE DER TABAK VERARBEITENDEN INDUSTRIE**

(30) Priorität: 02.05.2018 DE 102018110468
(71) Anmelder: Hauni Maschinenbau GmbH, 21033 Hamburg (DE)
(72) Erfinder: DEPPE, Oliver, 22119 Hamburg (DE)
(74) Vertreter: Seemann & Partner Patentanwälte mbB

(57) **Zusammenfassung**

Die Erfindung betrifft u.a. eine Entnahmetrommel (30) zum Entnehmen von stabförmigen Artikeln (100) der Tabak verarbeitenden Industrie, insbesondere Filterstäben, aus einem Magazin (20) und zum Fördern der stabförmigen Artikel (100) in queraxialer Richtung. Die Entnahmetrommel (30) weist einen um eine Rotationsachse (R) der Entnahmetrommel (30) rotierbaren oder rotierenden, insbesondere starren, Trommelkörper oder einen um eine Rotationsachse (R) der Entnahmetrommel (30) rotierbaren oder rotierenden, insbesondere starren, Trommelkörperring (32) auf, wobei auf der Außenseite der Entnahmetrommel (30) der Trommelkörper oder der Trommelkörperring (32) in Umfangsrichtung radial nach außen sich erstreckende und parallel zur Rotationsachse (R) der Entnahmetrommel (30) ausgerichtete Stege (38) aufweist, wobei zwischen zwei Stegen (34) jeweils ein Aufnahmebereich mit wenigstens zwei, insbesondere zwei, Aufnahmen (36.1, 36.2) für die stabförmigen Artikel (100) ausgebildet ist, wobei zwischen den Aufnahmen (36.1, 36.2) eines Aufnahmebereichs (34) jeweils eine, vorzugsweise stegfreie und/oder kontinuierliche, Rollfläche (39) vorgesehen ist, so dass während der queraxialen Förderung der stabförmigen Artikel (100) bei Rotation der Entnahmetrommel (30) in dem Aufnahmebereich ein stabförmiger Artikel (100) innerhalb des Aufnahmebereichs (34) von einer Aufnahme (36.2) des Aufnahmebereichs (34) zu einer anderen oder der anderen Aufnahme (36.1) desselben Aufnahmebereichs (34) auf der Rollfläche (39) rollbar ist oder gerollt wird.

## Beschreibung

Die Erfindung betrifft eine Entnahmetrommel zum Entnehmen von stabförmigen Artikeln der Tabak verarbeitenden Industrie, insbesondere Filterstäbe, aus einem Magazin und zum Fördern der stabförmigen Artikel in queraxialer Richtung. Ferner betrifft die Erfindung eine Einrichtung zum queraxialen Fördern von stabförmigen Artikeln der Tabak verarbeitenden Industrie, insbesondere Filterstäbe.

Außerdem betrifft die Erfindung ein Verfahren zum queraxialen Fördern von stabförmigen Artikeln, insbesondere Filterstäben, sowie eine Maschine der Tabak verarbeitenden Industrie, insbesondere Filteransetzmaschine oder Multifilterherstellungsmaschine.

Unter der Bezeichnung "MAX" sind Filteransetzmaschinen der Patentanmelderin bekannt. Unter einer Filteransetzmaschine wird eine Vorrichtung zur Herstellung von Filterzigaretten verstanden mit Mitteln zur Aufnahme von Tabakstöcken doppelter Länge, mit Mitteln zum Zerschneiden dieser doppelt langen Tabakstöcke in Tabakstöcke einfacher Länge, mit Mitteln zum Einbringen von Filterstopfen doppelter Länge zwischen die Tabakstöcke einfacher Länge, mit Mitteln zum Verbinden der doppelt langen Filterstopfen mit den Tabakstöcken einfacher Länge durch Umhüllen mit einem Belagpapierblättchen, das mittels einer Schneideinrichtung von einem zugeführten Belagpapierstreifen abgetrennt wird, mit Mitteln zum Ausführen eines Trennschnittes durch den doppelt langen Filterstopfen, so dass Filterzigaretten normaler Gebrauchslänge entstehen. Bei einer einbahnigen Filteransetzmaschine wird eine Folge bzw. Reihe von queraxial hintereinander angeordneten und transportierten Tabakstock-Filterstopfen-Tabakstock-Gruppen als einbahniger Materialstrom einer Belageinrichtung zugeführt.

Zur Zuführung von Filterstopfen zu den Tabakstockpaaren werden an einer Filteransetzmaschine aus einem Filtermagazin Filterstäbe mehrfacher Gebrauchslänge mittels einer an einem Magazin angeordneten Entnahmetrommel aus dem Magazin entnommen und nachfolgend zu Filterstopfen doppelter Gebrauchslänge geschnitten. Anschließend werden die geschnittenen Filterstopfen zu einer Reihe von hintereinander queraxial beabstandeten Filterstopfen angeordnet, die den längsaxial beabstandeten Tabakstockpaaren zugeführt werden.

In US 4,943,272 ist eine Vorrichtung zur Herstellung von Zigarettenfiltern beschrieben. Hierbei werden aus einem Filtermagazin mehrfach lange, z. B. dreifach lange, Filterstäbe mittels einer Entnahmetrommel entnommen und einer Schneidtrommel zugeführt, an der ein einziges Schneidmesser angeordnet ist.

Des Weiteren ist in EP 1 597 979 A1 eine Trommelanordnung einer Filterzuführung einer Filteransetzmaschine mit einer Entnahmetrommel gezeigt.

Die Aufgabe der Erfindung besteht darin, für Maschinen der Tabak verarbeitenden Industrie die Prozesssicherheit bei der Entnahme von stabförmigen Artikeln aus einem Magazin zu erhöhen, wobei der konstruktive Aufwand möglichst gering gehalten werden soll.

Gelöst wird diese Aufgabe durch eine Entnahmetrommel zum Entnehmen von stabförmigen Artikeln der Tabak verarbeitenden Industrie, insbesondere Filterstäben, aus einem Magazin und zum Fördern der stabförmigen Artikel in queraxialer Richtung, wobei die Entnahmetrommel einen um eine Rotationsachse der Entnahmetrommel rotierbaren oder rotierenden, insbesondere starren, Trommelkörper oder einen um eine Rotationsachse der Entnahmetrommel rotierbaren oder rotierenden, insbesondere starren, Trommelkörperring aufweist, wobei auf der Außenseite der Entnahmetrommel der Trommelkörper oder der Trommelkörperring in Umfangsrichtung radial nach außen sich erstreckende und parallel zur Rotationsachse der Entnahmetrommel ausgerichtete Stege aufweist, wobei zwischen zwei Stegen jeweils ein Aufnahmebereich mit wenigstens zwei, insbesondere zwei, Aufnahmen für die stabförmigen Artikel ausgebildet ist, wobei zwischen den Aufnahmen eines Aufnahmebereichs jeweils eine, vorzugsweise stegfreie und/oder kontinuierliche, Rollfläche vorgesehen ist, so dass während der queraxialen Förderung der stabförmigen Artikel bei Rotation der Entnahmetrommel in dem Aufnahmebereich ein stabförmiger Artikel innerhalb des Aufnahmebereichs von einer Aufnahme des Aufnahmebereichs zu einer anderen oder der anderen Aufnahme desselben Aufnahmebereichs auf der Rollfläche rollbar ist oder gerollt wird.

Die Erfindung beruht auf dem Gedanken, dass für die Entnahme von stabförmigen Artikeln, zum Beispiel Filterstäben, aus einem Magazin eine Entnahmetrommel bereitgestellt wird, die verbreiterte Aufnahmebereiche mit wenigstens zwei Aufnahmen für die stabförmigen Artikel aufweist, wodurch die Prozesssicherheit bei der Übergabe von stabförmigen Artikeln von der Entnahmetrommel an eine nachfolgende Fördertrommel erhöht wird, da durch die Verlagerung eines stabförmigen Artikels innerhalb des Aufnahmebereichs stets gewährleistet wird, dass für eine einen stabförmigen Artikel abgebende Aufnahme des Aufnahmebereichs ein Artikel in der Aufnahme angeordnet wird oder anordbar ist.

Hierbei ist es im Rahmen der Erfindung möglich, dass in dem Aufnahmebereich jeweils eine einen stabförmigen Artikel abgebende Aufnahme oder Mulde und eine einen stabförmigen Artikel speichernde Aufnahme vorgesehen sind.

Gemäß der Erfindung werden bei der Entnahme von Filterstäben aus dem Magazin beide Aufnahmen des jeweiligen Aufnahmebereichs mit stabförmigen Artikeln bestückt, so dass in einem Aufnahmebereich der Entnahmetrommel jeweils zwei stabförmige Artikel angeordnet sind. Anschließend wird bei der Abgabe nur ein stabförmiger Artikel aus der abgebenden Aufnahme des Aufnahmebereichs an eine nachfolgende Fördertrommel übergeben, wobei in der anderen Aufnahme desselben Aufnahmebereichs der stabförmige Artikel verbleibt. Anschließend wird der stabförmige Artikel aus dieser (Speicher-)Aufnahme vor Eintritt in das Magazin in die abgebende Aufnahme des Aufnahmebereichs gerollt. Nach Eintritt des Aufnahmebereichs in das Magazin wird anschließend ein weiterer stabförmiger Artikel aus dem Magazin in die nicht belegte Aufnahme des jeweiligen Aufnahmebereichs gelegt. Insgesamt wird durch die erfindungsgemäße Entnahmetrommel gewährleistet, dass immer ein stabförmiger Artikel in der abgebenden Aufnahme des jeweiligen Aufnahmebereichs angeordnet ist.

Die Aufnahmebereiche sind mit den mindestens zwei Aufnahmen für jeweils einen stabförmigen Artikel hierbei in Umfangsrichtung der Entnahmetrommel seitlich durch zwei radial sich erhebende Stege begrenzt. Hierbei wird durch die Stege verhindert, dass ein stabförmiger Artikel aus einem Aufnahmebereich in den in Umfangsrichtung benachbarten Aufnahmebereich gerollt werden kann.

Dazu ist in einer Weiterbildung der Entnahmetrommel vorgesehen, dass die Stege in konstanten Abständen in Umfangsrichtung auf der Außenseite der Entnahmetrommel angeordnet sind.

Gemäß einem weiteren vorteilhaften Aspekt ist bei der Entnahmetrommel vorgesehen, dass die Aufnahmebereiche bezogen auf die Förderrichtung der Entnahmetrommel jeweils eine vorauseilende Aufnahme für einen stabförmigen Artikel und eine nacheilende Aufnahme für einen stabförmigen Artikel aufweisen.

Außerdem zeichnet sich eine Weiterbildung der Entnahmetrommel dadurch aus, dass die vorauseilende Aufnahme des jeweiligen Aufnahmebereichs als Speicheraufnahme für einen stabförmigen Artikel ausgebildet ist und die nacheilende Aufnahme des jeweiligen Aufnahmebereichs als Abgabeaufnahme für einen stabförmigen Artikel ausgebildet ist. Hierbei ist die Aufgabeaufnahme vorgesehen, um an eine Abgabeposition der Entnahmetrommel den in der Abgabeaufnahme angeordneten stabförmigen Artikel an die nachfolgende Fördertrommel abzugeben.

Außerdem ist bei der Entnahmetrommel vorteilhafterweise vorgesehen, dass der radiale Abstand des Scheitelpunkts der zwischen zwei Aufnahmen eines Aufnahmebereichs vorgesehenen Rollfläche und der Rotationsachse der Entnahmetrommel kleiner als der radiale Abstand des Scheitelpunkts des Stegs oder der Stege, die den Aufnahmebereich jeweils begrenzen, und der Rotationsachse der Entnahmetrommel ist.

Des Weiteren zeichnet sich die Entnahme gemäß einer Ausführungsform dadurch aus, dass die jeweilige Rollfläche zwischen den Aufnahmen für die stabförmigen Artikel eines oder des Aufnahmebereichs flach und/oder ohne Diskontinuität ausgebildet ist.

Hierdurch wird gewährleistet, dass bei der Verlagerung von stabförmigen Artikeln innerhalb des jeweiligen Aufnahmebereichs der zu verlagernde stabförmige Artikel schonend von einer Aufnahme in die benachbarte Aufnahme desselben Aufnahmebereichs bewegt bzw. verlagert wird.

Außerdem wird die Aufgabe gelöst durch eine Einrichtung zum queraxialen Fördern von stabförmigen Artikeln der Tabak verarbeitenden Industrie, insbesondere Filterstäben, mit einem einen Auslass aufweisenden Magazin für stabförmige Artikel und mit einer am Auslass des Magazins angeordneten Entnahmetrommel, wobei die Entnahmetrommel wie voranstehend beschrieben ausgebildet ist. Zur Vermeidung von Wiederholungen wird auf die voranstehenden Ausführungen ausdrücklich verwiesen.

Darüber hinaus zeichnet sich eine Weiterbildung der Einrichtung dadurch aus, dass außerhalb des Magazins wenigstens eine eine Rollfläche aufweisende Rollvorrichtung an der Entnahmetrommel angeordnet ist. Mittels der Rollvorrichtung, die an der Entnahmetrommel angeordnet ist, wird gewährleistet, dass ein stabförmiger Artikel von einer Aufnahme bzw. Aufnahmemulde in die benachbarte Aufnahme desselben Aufnahmebereichs verlagert wird. Insbesondere erfolgt die Verlagerung eines stabförmigen Artikels innerhalb des Aufnahmebereichs durch Rollung des stabförmigen Artikels auf der Rollfläche des Aufnahmebereichs im Zusammenwirken mit der Rollfläche der Rollvorrichtung. Vorzugsweise ist die Rollvorrichtung als Rollleiste oder dergleichen ausgebildet.

Dabei ist weiterhin bei der Einrichtung vorteilhafterweise vorgesehen, dass bezogen auf die Förderrichtung der Entnahmetrommel die oder eine Rollvorrichtung zwischen einer Austrittsposition am Auslass des Magazins und einer Abgabeposition der stabförmigen Artikel, bei der die stabförmigen Artikel von der Entnahmetrommel an eine nachfolgende an der Entnahmetrommel angeordnete Fördertrommel abgegeben werden, angeordnet ist und/oder dass bezogen auf die Förderrichtung der Entnahmetrommel die oder eine, insbesondere zweite, Rollvorrichtung zwischen einer oder der Abgabeposition der stabförmigen Artikel, bei der die stabförmigen Artikel von der Entnahmetrommel an eine nachfolgende an der Entnahmetrommel angeordnete Fördertrommel abgegeben werden, und einer Eintrittsposition der Entnahmetrommel an einem Einlass des Magazins für die Entnahmetrommel angeordnet ist.

Gemäß einer bevorzugten Ausführungsform ist bei der Einrichtung vorgesehen, dass an der Entnahmetrommel eine Fördertrommel zur Aufnahme von von der Entnahmetrommel abgegebenen oder abgebbaren stabförmigen Artikel vorgesehen ist.

Außerdem wird die Aufgabe gelöst durch ein Verfahren zum queraxialen Fördern von stabförmigen Artikeln, insbesondere Filterstäben, wobei stabförmige Artikel aus einem mit stabförmigen Artikeln befüllten Magazin mittels einer am Magazin vorgesehenen Entnahmetrommel, wie voranstehend beschrieben, entnommen werden, wobei die stabförmigen Artikel in Umfangsrichtung der Entnahmetrommel in den Aufnahmebereichen für die stabförmigen Artikel jeweils in den Aufnahmen der Aufnahmebereiche queraxial hintereinander angeordnet werden und in queraxialer Richtung bei Rotation der Entnahmetrommel gefördert werden.

Dazu zeichnet sich eine Weiterbildung des Verfahrens dadurch aus, dass bezogen auf die Förderrichtung der Entnahmetrommel die stabförmigen Artikel, die jeweils in einer nacheilenden Aufnahme der jeweiligen mit mehreren, insbesondere zwei, Aufnahmen ausgebildeten Aufnahmebereiche zwischen zwei Stegen angeordnet sind, an eine nachfolgende Fördertrommel abgegeben werden.

Ferner ist bei einer bevorzugten Ausgestaltung des Verfahrens weiter vorgesehen, dass nach der Abgabe der in den jeweiligen nacheilenden Aufnahmen der Aufnahmebereiche angeordneten stabförmigen Artikel die in den voreilenden Aufnahmen der jeweiligen Aufnahmebereiche angeordneten stabförmigen Artikel während ihrer queraxialen Förderung auf der Entnahmetrommel und vor Eintritt in das Magazin auf der Rollfläche des jeweiligen Aufnahmebereichs gerollt werden und in der nacheilenden Aufnahme des jeweiligen Aufnahmebereichs angeordnet werden.

Gemäß einem weiteren bevorzugten Aspekt des Verfahrens ist vorgesehen, dass bezogen auf die Förderrichtung der Entnahmetrommel bei Anordnung eines, vorzugsweise ausschließlich eines, stabförmigen Artikels in dem jeweiligen Aufnahmebereich in der oder in einer vorauseilenden Aufnahme desselben Aufnahmebereichs nach Austritt des Aufnahmebereichs aus dem Magazin, wobei in der oder einer nacheilenden Aufnahme desselben Aufnahmebereichs kein stabförmiger Artikel angeordnet ist, der in der vorauseilenden Aufnahme des Aufnahmebereichs angeordnete stabförmige Artikel während seiner queraxialen Förderung bei Rotation der Entnahmetrommel auf der Rollfläche desselben Aufnahmebereichs gerollt wird und in der nacheilenden Aufnahme des Aufnahmebereichs angeordnet wird und anschließend der stabförmige Artikel von der nacheilenden Aufnahme des Aufnahmebereichs an eine an der Entnahmetrommel angeordneten Fördertrommel abgegeben wird.

Für die Rollung der stabförmigen Artikel in den Aufnahmebereichen ist hierbei jeweils eine Rollvorrichtung vorgesehen, die mit der Rollfläche des jeweiligen Aufnahmebereichs zusammenwirkt.

Außerdem wird die Aufgabe gelöst durch eine Maschine der Tabak verarbeitenden Industrie, insbesondere Filteransetzmaschine oder Multifilterherstellungsmaschine, mit einer Entnahmetrommel, wie voranstehend beschrieben, oder mit einer Einrichtung zum queraxialen Fördern von stabförmigen Artikeln der Tabak verarbeitenden Industrie, wie voranstehend beschrieben.

Zur Vermeidung von Wiederholungen wird auf die voranstehenden Ausführungen ausdrücklich verwiesen.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: schematisch eine Trommelanordnung einer Filterzuführung einer Filteransetzmaschine mit einer Entnahmetrommel gemäß dem Stand der Technik;
- Fig. 2: schematisch im Ausschnitt eine Ansicht einer Filterzuführung mit einer erfindungsgemäßen Entnahmetrommel;
- Fig. 3a: schematisch eine perspektivische Ansicht der Entnahmetrommel;
- Fig. 3b: schematisch ausschnittsweise eine Querschnittsansicht durch die Entnahmetrommel;
- Fig. 4: schematisch ein weiteres Ausführungsbeispiel einer Filterzuführeinrichtung mit einer Entnahmetrommel im Ausschnitt.

In den Zeichnungen sind jeweils gleiche oder gleichartige Elemente und/oder Teile mit denselben Bezugsziffern versehen, so dass von einer erneuten Vorstellung jeweils abgesehen wird.

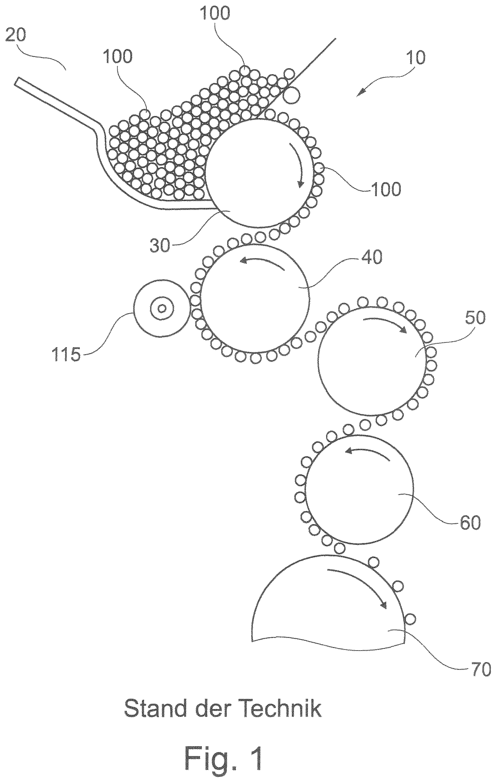

In Fig. 1 ist eine Ansicht einer Filterzuführeinrichtung 10 gemäß dem Stand der Technik schematisch dargestellt, wobei die Filterzuführeinrichtung 10 beispielsweise in eine Filteransetzmaschine integriert ist und Bestandteil der Filteransetzmaschine ist. Aus einem Magazin 20 mit Filterstäben 100 werden die Filterstäbe 100 mittels einer Entnahmetrommel 30 einzeln entnommen und anschließend von der Entnahmetrommel 30 an eine Schneidtrommel 40 übergeben. An der Schneidtrommel 40 sind mehrere Schneidmesser 115 angeordnet, so dass mittels der Schneidmesser 115 die Filterstäbe 100 in mehrere doppelt lange Filterstopfen geschnitten werden.

Nachfolgend werden die geschnittenen doppelt langen Filterstopfen auf einer Staffeltrommel 50 gestaffelt und in gestaffelter Weise an eine Schiebetrommel 60 übergeben. Auf der Schiebetrommel 60 werden die gestaffelten Filterstopfen zu einer Reihe queraxial hintereinander angeordnet und danach an eine Beschleunigertrommel 70 übergeben, so dass die vereinzelten Filterstopfen an eine nachfolgende (hier nicht dargestellte) Zuführtrommel weitergefördert werden, so dass die Filterstopfen zwischen Tabakstockpaaren eingelegt werden.

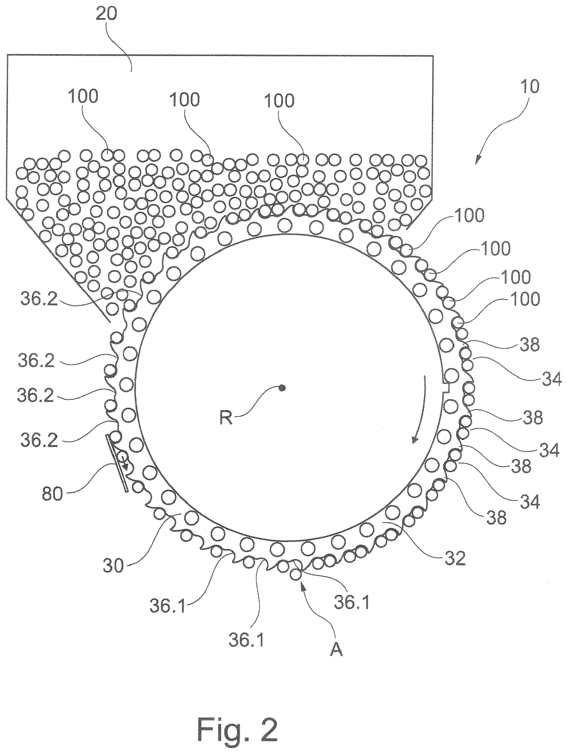

Fig. 2 zeigt die Anordnung einer Entnahmetrommel 30 an dem Magazin 20 der Filterzuführeinrichtung 10, in dem Filterstäbe 100 angeordnet sind. Die Filterstäbe 100 werden aus dem Magazin 20 mittels der Entnahmetrommel 30 entnommen und nachfolgend zu einer weiteren Fördertrommel, zum Beispiel Schneidtrommel 40, gefördert.

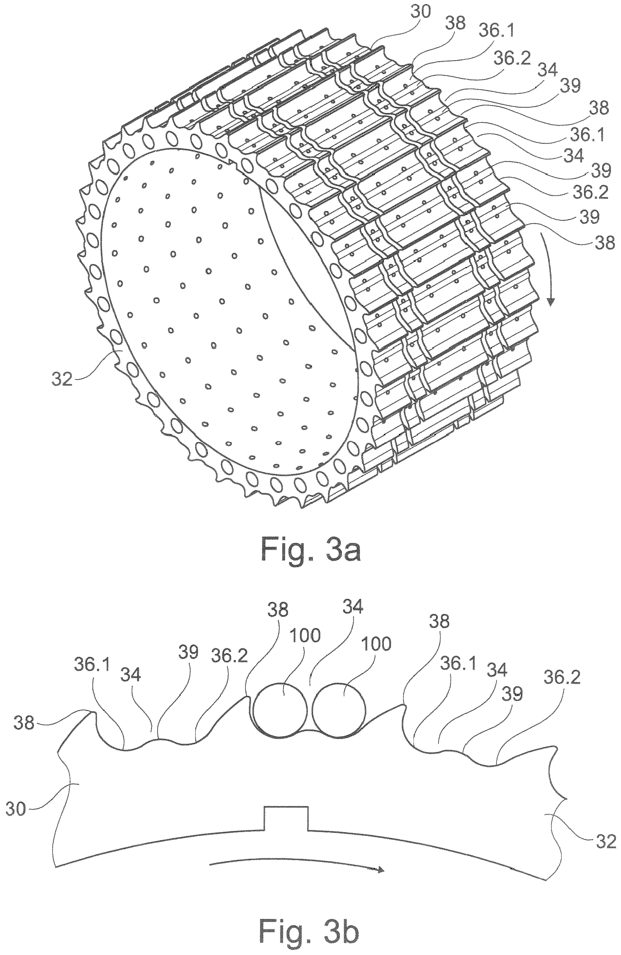

In Fig. 3a ist schematisch eine perspektivische Ansicht der Entnahmetrommel 30 gezeigt. Die Darstellung in Fig. 3b ist eine Querschnittsansicht der Entnahmetrommel 30 im Ausschnitt.

Die Entnahmetrommel 30 weist einen äußeren Ringkörper 32 auf, auf dessen Umfangsfläche Aufnahmebereiche 34 ausgebildet sind, wobei die Aufnahmebereiche 34 jeweils zwei Aufnahmen 36.1, 36.2 für die Filterstäbe 100 aufweisen. In den Aufnahmen 36.1, 36.2, die vorzugsweise muldenförmig ausgebildet sind, werden bei Durchtritt der Aufnahmebereiche 34 durch das Magazin 20 Filterstäbe 100 in den Aufnahmen 36.1, 36.2 der Aufnahmebereiche 34 angeordnet. Zwischen zwei Aufnahmebereichen 34 sind jeweils Stege 38 vorgesehen, wodurch die Aufnahmebereiche 34 mit den beiden Aufnahmen 36.1, 36.2 in Umfangsrichtung jeweils voneinander getrennt sind.

Zwischen zwei Stegen 38 ist jeweils der Aufnahmebereich 34 mit den beiden Aufnahmen 36.1, 36.2 ausgebildet. Darüber hinaus ist zwischen den Aufnahmen 36.1, 36.2 eine Rollfläche 39 ausgebildet, so dass während der Rotation der Entnahmetrommel 30 um ihre Rotationsachse R beispielsweise ein Filterstab 100 aus der Aufnahme 36.2 über die Rollfläche 39 in die Aufnahme 36.1 gerollt wird. Hierbei ist die Aufnahme 36.1 mit einem Filterstab 100 nicht belegt.

Die Rollfläche 39 der Aufnahmebereiche 34 erstreckt sich in radialer Richtung nach außen, wobei der radiale Abstand des Scheitelpunkts der Rollfläche 39 zur Rotationsache R kleiner als der radiale Abstand der Scheitelpunkte der Stege 38 zur Rotationsachse R ist.

Nach der Entnahme von Filterstäben 100 aus dem Magazin 20 (vgl. Fig. 2) werden die in den Aufnahmebereichen 34 angeordneten Filterstäbe 100 bei Rotation des Ringkörpers 32 queraxial gefördert und zu einem Abgabebereich A gefördert, in dem der jeweilige Filterstab 100, der bezogen auf die Förderrichtung der Entnahmetrommel 30 in der nachlaufenden Aufnahme 36.1 der Aufnahmebereiche 34 jeweils an eine nachfolgende Fördertrommel, zum Beispiel eine Schneidtrommel 40, übergeben wird. Der jeweilige in der vorauseilenden Aufnahme 36.2 der Aufnahmebereiche 34 aufgenommene Filterstab 100 in den Aufnahmebereichen 34 wird mittels Saugluft im Aufnahmebereich 34 der Aufnahme 36.2 jeweils gehalten, so dass der in der Aufnahme 36.2 gehaltene Filterstab 100 in dem Aufnahmebereich 34 auf der Entnahmetrommel 30 nach dem Durchlaufen des Abgabebereichs verbleibt.

Unter Rotation der Entnahmetrommel 30 um die Rotationsachse R werden anschließend die in der vorauseilenden Aufnahme 36.2 der Aufnahmebereiche 34 verbleibenden Filterstäbe 100 in Richtung einer Rollleiste 80 gefördert, wobei während der Rotation der Entnahmetrommel 30 die in den vorauseilenden Aufnahmen 36.2 angeordneten Filterstäbe 100 im Zusammenwirken mit der Rollfläche 39 der Aufnahmebereiche 34 von der vorauseilenden Aufnahme 36.2 in die nacheilende Aufnahme 36.1 des jeweiligen Aufnahmebereichs 34 gerollt werden, so dass vor Eintritt der Aufnahmebereiche 34 in das Magazin 20 die Filterstäbe 100 in der nacheilenden Aufnahme 36.1 der Aufnahmebereiche 34 jeweils angeordnet werden. Anschließend werden beim Durchlaufen der Aufnahmebereiche 34 durch das Magazin 20 Filterstäbe 100 in den vorauseilenden Aufnahmen 36.2 der jeweiligen Aufnahmebereiche 34 aufgenommen und aus dem Magazin 20 herausgefördert.

Wie aus Fig. 3a ersichtlich, erstrecken sich die Stege 38 sowie die Aufnahmen 36.1, 36.2 und auch die Rollflächen 39 der Aufnahmebereiche 34 parallel zur Rotationsachse R der Entnahmetrommel 30.

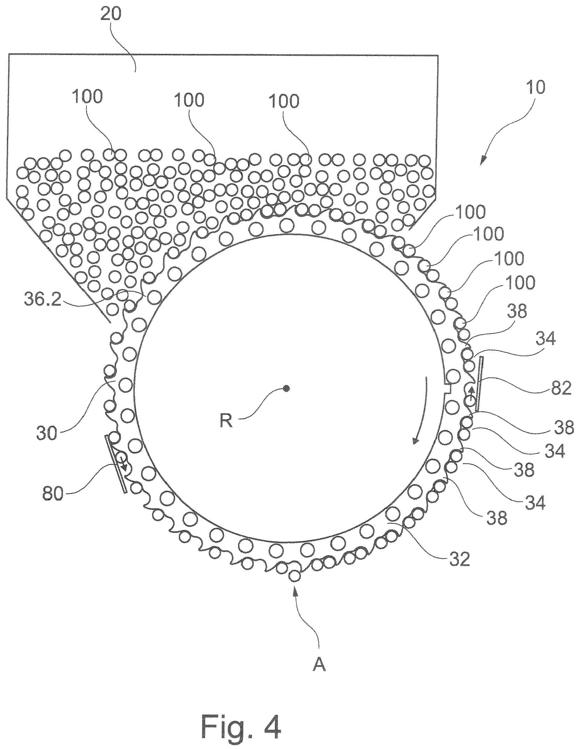

In Fig. 4 ist ein weiteres Ausführungsbeispiel in der Anordnung der Entnahmetrommel 30 an dem Magazin 20 für eine Filterzuführeinrichtung 10 schematisch dargestellt.

Hierbei ist gegenüber dem Ausführungsbeispiel in Fig. 2 zusätzlich zwischen dem Auslass an dem Magazin 20 für die Filterstäbe 100 und dem Abgabebereich A in Förderrichtung der Entnahmetrommel 30 eine weitere Rollleiste 82 angeordnet, so dass im Falle, dass die nacheilende Aufnahme 36.1 der Aufnahmebereiche 34 durch einen Filterstab 100 nicht belegt ist, der in der vorauseilenden Aufnahme 36.2 des jeweiligen Aufnahmebereichs 34 angeordnete Filterstab 100 in die nacheilende Aufnahme 36.1 desselben Aufnahmebereichs 34 gerollt wird, wodurch sichergestellt ist, dass in der den Filterstab 100 abgebenden Aufnahme 36.1 des Aufnahmebereichs 34 ein Filterstab 100 bei Erreichen des Abgabebereichs A angeordnet ist.

Sowohl durch die Rollleiste 80 (vgl. Fig. 2) als auch gegebenenfalls zusätzlich durch die Rollleiste 82 (vgl. Fig. 4) wird gewährleistet, dass in der nacheilenden und den Filterstab 100 abgebenden Aufnahme 36.1 der Aufnahmebereiche 34 jeweils ein Filterstab 100 angeordnet ist. Dadurch wird eine höhere Prozesssicherheit auch bei höheren Fördergeschwindigkeiten an einer Prozessmaschine, insbesondere Filteransetzmaschine, gewährleistet.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein. Im Rahmen der Erfindung sind Merkmale, die mit "insbesondere" oder "vorzugsweise" gekennzeichnet sind, als fakultative Merkmale zu verstehen.

### Bezugszeichenliste

- 10: Filterzuführeinrichtung
- 20: Magazin
- 30: Entnahmetrommel
- 32: Ringkörper
- 34: Aufnahmebereich
- 36.1, 36.2: Aufnahme
- 38: Steg
- 39: Rollfläche
- 40: Schneidtrommel
- 50: Staffeltrommel
- 60: Schiebetrommel
- 70: Beschleunigertrommel
- 80: Rollleiste
- 82: Rollleiste
- 100: Filterstab
- 115: Schneidmesser

- A: Abgabebereich
- R: Rotationsachse

## Patentansprüche

1. Entnahmetrommel (30) zum Entnehmen von stabförmigen Artikeln (100) der Tabak verarbeitenden Industrie, insbesondere Filterstäben, aus einem Magazin (20) und zum Fördern der stabförmigen Artikel (100) in queraxialer Richtung, wobei die Entnahmetrommel (30) einen um eine Rotationsachse (R) der Entnahmetrommel (30) rotierbaren oder rotierenden, insbesondere starren, Trommelkörper oder einen um eine Rotationsachse (R) der Entnahmetrommel (30) rotierbaren oder rotierenden, insbesondere starren, Trommelkörperring (32) aufweist, wobei auf der Außenseite der Entnahmetrommel (30) der Trommelkörper oder der Trommelkörperring (32) in Umfangsrichtung radial nach außen sich erstreckende und parallel zur Rotationsachse (R) der Entnahmetrommel (30) ausgerichtete Stege (38) aufweist, wobei zwischen zwei Stegen (38) jeweils ein Aufnahmebereich (34) mit wenigstens zwei, insbesondere zwei, Aufnahmen (36.1, 36.2) für die stabförmigen Artikel (100) ausgebildet ist, wobei zwischen den Aufnahmen (36.1, 36.2) eines Aufnahmebereichs (34) jeweils eine, vorzugsweise stegfreie und/oder kontinuierliche, Rollfläche (39) vorgesehen ist, so dass während der queraxialen Förderung der stabförmigen Artikel (100) bei Rotation der Entnahmetrommel (30) in dem Aufnahmebereich (34) ein stabförmiger Artikel (100) innerhalb des Aufnahmebereichs (34) von einer Aufnahme (36.2) des Aufnahmebereichs (34) zu einer anderen oder der anderen Aufnahme (36.1) desselben Aufnahmebereichs (34) auf der Rollfläche (39) rollbar ist oder gerollt wird.

2. Entnahmetrommel (30) nach Anspruch 1, **dadurch gekennzeichnet, dass** die Stege (38) in konstanten Abständen in Umfangsrichtung auf der Außenseite der Entnahmetrommel (30) angeordnet sind.

3. Entnahmetrommel (30) nach Anspruch 1 oder 2, **dadurch gekennzeichnet, dass** die Aufnahmebereiche (34) bezogen auf die Förderrichtung der Entnahmetrommel (30) jeweils eine vorauseilende Aufnahme (36.2) für einen stabförmigen Artikel (100) und eine nacheilende Aufnahme (36.1) für einen stabförmigen Artikel (100) aufweisen.

4. Entnahmetrommel (30) nach Anspruch 3, **dadurch gekennzeichnet, dass** die vorauseilende Aufnahme (36.2) des jeweiligen Aufnahmebereichs (34) als Speicheraufnahme für einen stabförmigen Artikel (100) ausgebildet ist und die nacheilende Aufnahme (36.1) des jeweiligen Aufnahmebereichs (34) als Abgabeaufnahme für einen stabförmigen Artikel (100) ausgebildet ist.

5. Entnahmetrommel (30) nach einem der Ansprüche 1 bis 4, **dadurch gekennzeichnet, dass** der radiale Abstand des Scheitelpunkts der zwischen zwei Aufnahmen (36.1, 36.2) eines Aufnahmebereichs (34) vorgesehenen Rollfläche (39) und der Rotationsachse (R) der Entnahmetrommel (30) kleiner als der radiale Abstand des Scheitelpunkts des Stegs (38) oder der Stege (38), die den Aufnahmebereich (34) jeweils begrenzen, und der Rotationsachse (R) der Entnahmetrommel (30) ist.

6. Entnahmetrommel (30) nach einem der Ansprüche 1 bis 5, **dadurch gekennzeichnet, dass** die Rollfläche (39) zwischen den Aufnahmen (36.1, 36.2) für die stabförmigen Artikel (100) eines oder des Aufnahmebereichs (34) flach und/oder ohne Diskontinuität ausgebildet ist.

7. Einrichtung zum queraxialen Fördern von stabförmigen Artikeln (100) der Tabak verarbeitenden Industrie, insbesondere Filterstäben, mit einem einen Auslass aufweisenden Magazin (20) für stabförmige Artikel (100) und mit einer am Auslass des Magazins (20) angeordneten Entnahmetrommel (30), wobei die Entnahmetrommel (30) nach einem der Ansprüche 1 bis 6 ausgebildet ist.

8. Einrichtung nach Anspruch 7, **dadurch gekennzeichnet, dass** außerhalb des Magazins (20) wenigstens eine eine Rollfläche (39) aufweisende Rollvorrichtung (80, 82) an der Entnahmetrommel (30) angeordnet ist.

9. Einrichtung nach Anspruch 8, **dadurch gekennzeichnet, dass** bezogen auf die Förderrichtung der Entnahmetrommel (30) die oder eine Rollvorrichtung (80, 82) zwischen einer Austrittsposition am Auslass des Magazins (20) und einer Abgabeposition der stabförmigen Artikel (100), bei der die stabförmigen Artikel (100) von der Entnahmetrommel (30) an eine nachfolgende an der Entnahmetrommel (30) angeordnete Fördertrommel abgegeben werden, angeordnet ist und/oder dass bezogen auf die Förderrichtung der Entnahmetrommel (30) die oder eine, insbesondere zweite, Rollvorrichtung (80, 82) zwischen einer oder der Abgabeposition der stabförmigen Artikel (100), bei der die stabförmigen Artikel (100) von der Entnahmetrommel (30) an eine nachfolgende an der Entnahmetrommel (30) angeordnete Fördertrommel abgegeben werden, und einer Eintrittsposition der Entnahmetrommel (30) an einem Einlass des Magazins (20) für die Entnahmetrommel (30) angeordnet ist.

10. Einrichtung nach einem der Ansprüche 7 bis 9, **dadurch gekennzeichnet, dass** an der Entnahmetrommel (30) eine Fördertrommel zur Aufnahme von von der Entnahmetrommel (30) abgegebenen oder abgebbaren stabförmigen Artikel (100) vorgesehen ist.

11. Verfahren zum queraxialen Fördern von stabförmigen Artikeln (100), insbesondere Filterstäben, wobei stabförmige Artikel (100) aus einem mit stabförmigen Artikeln (100) befüllten Magazin (20) mittels einer am Magazin (20) vorgesehenen Entnahmetrommel (30) nach einem der Ansprüche 1 bis 6 entnommen werden, wobei die stabförmigen Artikel (100) in Umfangsrichtung der Entnahmetrommel (30) in den Aufnahmebereichen (34) für die stabförmigen Artikel (100) jeweils queraxial hintereinander angeordnet werden und in queraxialer Richtung bei Rotation der Entnahmetrommel (30) gefördert werden.

12. Verfahren nach Anspruch 11, **dadurch gekennzeichnet, dass** bezogen auf die Förderrichtung der Entnahmetrommel (30) die stabförmigen Artikel (100), die jeweils in einer nacheilenden Aufnahme (36.1) der jeweiligen mit mehreren, insbesondere zwei, Aufnahmen (36.1, 36.2) ausgebildeten Aufnahmebereiche (34) zwischen zwei Stegen (38) angeordnet sind, an eine nachfolgende Fördertrommel abgegeben werden.

13. Verfahren nach Anspruch 12, **dadurch gekennzeichnet, dass** nach der Abgabe der in den jeweiligen nacheilenden Aufnahmen (36.1, 36.2) der Aufnahmebereiche (34) angeordneten stabförmigen Artikel (100) die in den voreilenden Aufnahmen (36.1, 36.2) der jeweiligen Aufnahmebereiche (34) angeordneten stabförmigen Artikel (100) während ihrer queraxialen Förderung auf der Entnahmetrommel (30) und vor Eintritt in das Magazin (20) auf der Rollfläche (39) des jeweiligen Aufnahmebereichs (34) gerollt werden und in der nacheilenden Aufnahme des jeweiligen Aufnahmebereichs (34) angeordnet werden.

14. Verfahren nach Anspruch 11, **dadurch gekennzeichnet, dass** bezogen auf die Förderrichtung der Entnahmetrommel (30) bei Anordnung eines, vorzugsweise ausschließlich eines, stabförmigen Artikels (100) in dem jeweiligen Aufnahmebereich (34) in der oder in einer vorauseilenden Aufnahme (36.1, 36.2) desselben Aufnahmebereichs (34) nach Austritt des Aufnahmebereichs (34) aus dem Magazin (20), wobei in der oder einer nacheilenden Aufnahme (36.1, 36.2) desselben Aufnahmebereichs (34) kein stabförmiger Artikel (100) angeordnet ist, der in der vorauseilenden Aufnahme (36.1, 36.2) des Aufnahmebereichs (34) angeordnete stabförmige Artikel (100) während seiner queraxialen Förderung bei Rotation der Entnahmetrommel (30) auf der Rollfläche (39) desselben Aufnahmebereichs (34) gerollt wird und in der nacheilenden Aufnahme (36.1, 36.2) des Aufnahmebereichs (34) angeordnet wird und anschließend der stabförmige Artikel (100) von der nacheilenden Aufnahme (36.1, 36,2) des Aufnahmebereichs (34) an eine an der Entnahmetrommel (30) angeordnete Fördertrommel abgegeben wird.

15. Maschine der Tabak verarbeitenden Industrie, insbesondere Filteransetzmaschine oder Multifilterherstellungsmaschine, mit einer Entnahmetrommel (30) nach einem der Ansprüche 1 bis 7 oder mit einer Einrichtung nach einem der Ansprüche 7 bis 10.
